# EUROPEAN PATENT SPECIFICATION

(11) **EP 3 925 885 B1**
(45) Date of publication and mention of the grant of the patent: **21.10.2026**
(21) Application number: 21180408.3
(22) Date of filing: 18.06.2021
(51) Int. Cl.: B64D 13/00, B60H 1/00, B60R 16/037

(54) **SOFTWARE CONTROLLED AIR FLOW MANAGEMENT**
SOFTWAREGESTEUERTES LUFTFLUSSMANAGEMENT
GESTION D'ÉCOULEMENT D'AIR COMMANDÉE PAR LOGICIEL

(30) Priority: 18.06.2020 US 202063040847 P
(43) Date of publication of application: 22.12.2021
(73) Proprietor: B/E Aerospace, Inc., Winston-Salem, NC 27105 (US)
(72) Inventor: KRENZ, Michael, Roscoe, 61073 (US); COMISKEY, Christopher M., Winston-Salem, 27105 (US)
(74) Representative: Dehns

(56) References cited:
- CN-A- 105 292 493
- DE-A1- 102015 115 066
- KR-A- 20140 124 449
- US-A1- 2003 096 572
- US-A1- 2012 315 835
- US-A1- 2016 325 839
- US-A1- 2018 079 278
- US-A1- 2019 061 957
- US-A1- 2019 184 788

## Description

### BACKGROUND

### 1. Field

The present disclosure relates to airflow management, and more particularly to airflow management in aircraft cabins.

### 2. Description of Related Art

Controlling airflow has been shown to aid in the control of contamination spread by air. This contamination could be particulate, droplet, gaseous or other forms of airborne matter. To more precisely control the airflow onboard aircraft, it may be desirable to be able to control the airflow through each vent in an airflow system into an enclosed space. Air flow management is disclosed in US 2019/061957 A1, according to its abstract discloses methods, apparatus and systems for aircraft cabin temperature control using temperature data from mobile electronic devices.

US 2018/079278 A1 according to its abstract discloses smart air-conditioning and ventilation systems for vehicle interiors and cabins, railway passenger carriages, etc. The ventilation system has a sensing element for recognizing the fact of exhalation and to exhaust air from the interior of the vehicle, wherein the air exhaust is configured to remove mainly a portion of air exhaled by passengers. Further air flow management systems can be found in documents US 2012/315835 A1 and CN 105292493 A.

The conventional techniques have been considered satisfactory for their intended purpose. However, there is an ever present need for improved systems and methods for mitigated spread of airborne pathogens in enclosed environments. This disclosure provides a solution for this need.

### SUMMARY

A system is provided as defined by claim 1.

A controller is operatively connected to receive signals from the plurality of sensors. The controller includes machine readable instructions configured to cause the controller to adjust the flow of air through the plurality of ducts with a respective valve or subset of the valves based on the sensed passenger condition. In certain embodiments, the controller can include an adaptive logic parameter definition item (PDI) file.

In certain embodiments, the imaging device can be a thermal imaging device, and the sensed passenger condition can be a passenger body temperature above a threshold.

Adjusting the flow of air through the plurality of ducts can include changing an airflow circulation pattern based on the sensed passenger condition. The sensed passenger condition can include at least one of weight distribution of passengers within the interior space, physical distribution of passengers within the interior space, a passenger body temperature above a threshold, a change in relative humidity in a passenger unit above a threshold, and/or a sound of coughing or sneezing.

**In** embodiments, the valve can be disposed in the duct in series with a passenger gasper valve. **In** embodiments, the valve can be disposed in the duct proximate a cabin pressurization port. **In** embodiments, the plurality of sensors can include a sensor incorporated into an in-flight entertainment (IFE) system.

Each duct of the plurality of ducts can further include an inlet and an outflow. **In** embodiments, the outflow can be positioned on a floor of the interior space. **In** certain embodiments, the exhausted air is exhausted to atmosphere through an outflow valve. **In** certain embodiments, the exhausted air is passed through an air filter before being recirculated.

**In** accordance with another aspect of this disclosure, a method is provided as defined by claim 10.

**In** embodiments, adjusting airflow can include, decreasing airflow to a respective passenger unit holding a sick passenger, and increasing airflow to a respective passenger unit surrounding the respective passenger unit holding the sick passenger.

**In** embodiments, the method can further include at least one of imaging the interior space at a first time, imaging the space at a second time, and comparing the images to determine an occupancy; and/or sensing a weight distribution of passengers within the interior space to determine an occupancy.

Exhausting can include at least one of exhausting air to atmosphere through an outflow valve, and/or exhausting air to a recirculation module and filtering the air through an air filter before recirculation.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic cross-sectional front end elevation view of an embodiment of a system constructed in accordance with the present disclosure, showing air flow patterns in a cabin;
Fig. 2 is a schematic perspective view of a plurality of passengers in the cabin of Fig. 1, showing a pressure equalization scheme;
Fig. 3 is a schematic perspective view of a passenger in the cabin of Fig. 1; showing the system of Fig. 1 in an in-flight entertainment system;

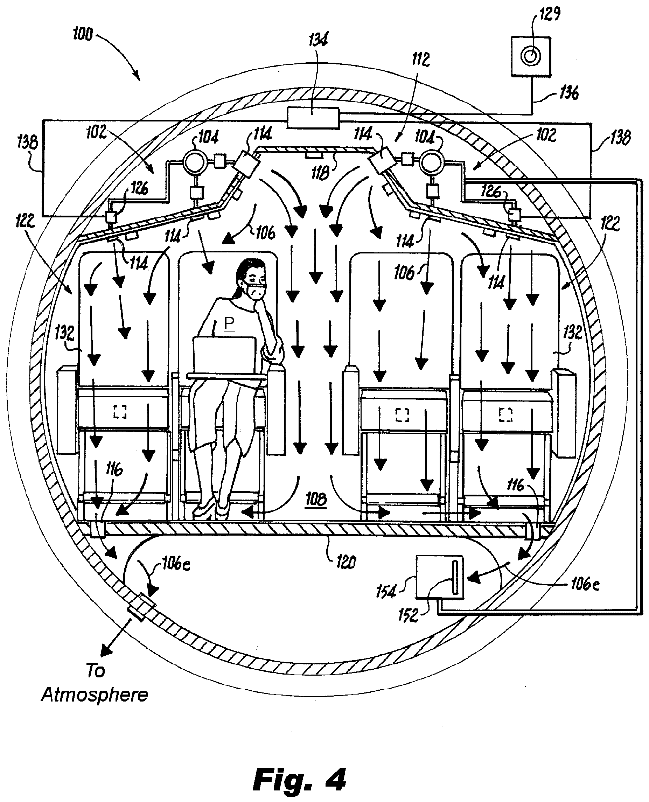

Fig. 4 is a schematic cross-sectional front end elevation view of an embodiment of a system constructed in accordance with the present disclosure, showing modified air flow patterns in the cabin of Fig. 1;

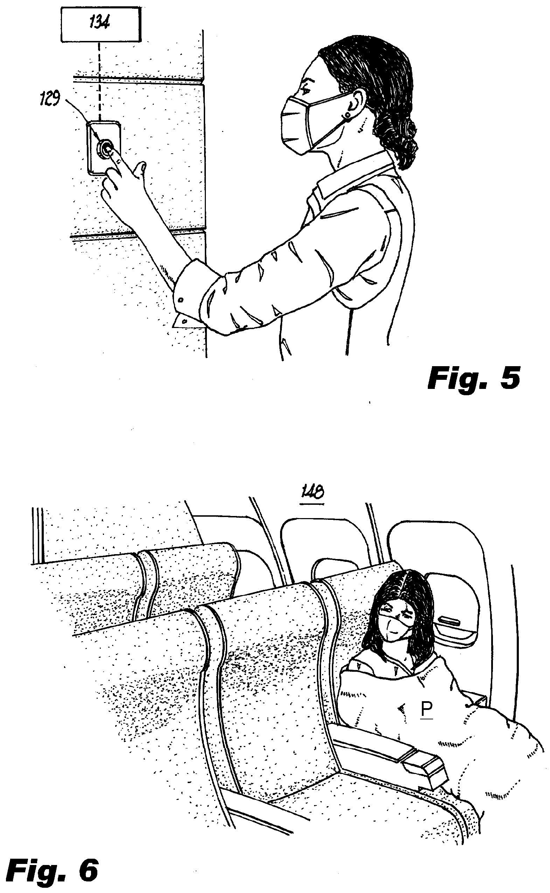

Fig. 5 is a schematic perspective view of a user interacting with the system of Fig. 1; and
Fig. 6 is a schematic perspective view of the system of Fig. 1, showing a sick passenger in isolation for contagion containment.

### DETAILED DESCRIPTION

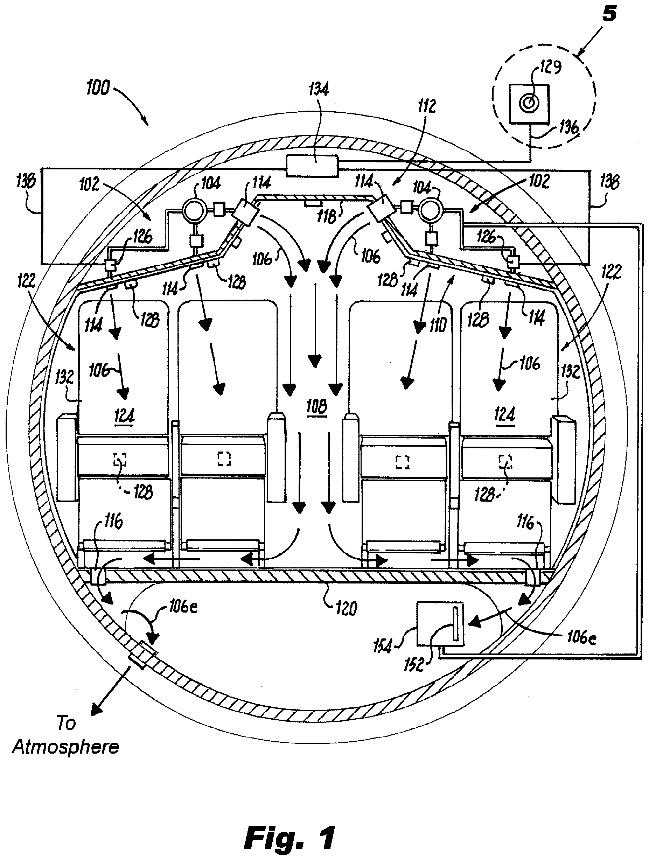

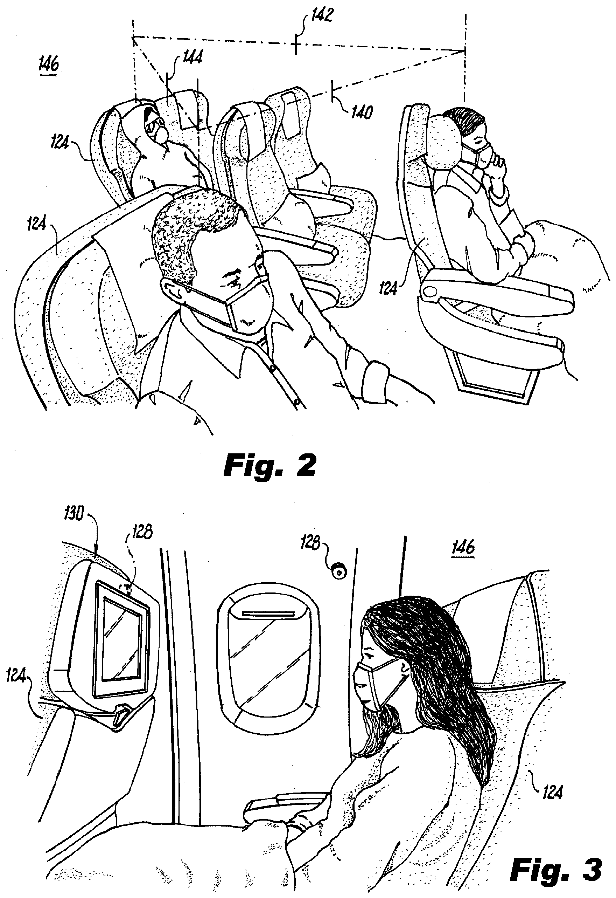

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to reduce the spread of contagions aboard aircraft, e.g., using air flows from the environmental control system (ECS).

Aircraft cabins strive to provide equalized pressure amongst all passengers, encouraging vertical air flow from top to bottom in the cabin. To do so, the majority of airflow into the cabin comes from a crown (e.g. on or near the ceiling) and is dispersed throughout the cabin, before being exhausted through an outflow in the floor of the cabin to the cargo bay. The low pressure cabin to cargo outflows create a suction effect to pull the air released from the crown downward, and into the outflow, where the air can then be passed through cabin outflow ducts to a cargo hold. Once in the cargo hold, the air can be exhausted completely (e.g. dumped overboard to the atmosphere via the aircraft outflow valve(s)) or can be recirculated to the cabin after filtration. In certain instances, there may be a need to control the flow of air throughout the cabin (e.g. pandemics, flu season, or the like). For example, it has been shown that airflow patterns in an enclosed space can affect the spread of aerosol pathogens. Therefore, strategically changing airflow patterns within the aircraft cabin can be used to reduce airborne spread of pathogens during flight.

Various control algorithms can be implemented using adaptive logic in software to vary the airflow circulation patterns in the aircraft based upon certain sensed conditions, for example based on occupancy and/or sensed health conditions such as increased temperature in passengers or change in breathing rate. System 100 provides a means for controlling the flow of air given the sensed conditions.

The system 100 includes an environmental control system (ECS) 102 having a plurality of ducts 104 configured to convey a flow of air 106 into an interior space (e.g. cabin) 108. The ducts 104 can direct air 106 to the interior space 108 either through a gasper circuit 110 or through the crown 112. Each duct 104 includes an inlet 114 into the interior space 108 and an outflow 116 from the interior space 108, where the inlet 114 is on or near a ceiling 118 of the interior space 108 (e.g. in the crown 112 or in the gasper circuit 110) and the outflow 116 is positioned on a floor 120 of the interior space 108. Multiple inlets 114 and outflows 116 can be included, for example there may be an inlet 114 and outflow 116 local to each row 122 within the interior space 108. A row 122 can be comprised of any number of passenger units 124.

A plurality of software controlled valves 126 are disposed in the ducts 104 to control the flow of air 106 through a respective duct into the interior space 108. For example, some valves can be disposed in the duct 104 in series with a passenger gasper valve (e.g. inlet 114 of gasper circuit), and some valves can be disposed in the duct 104 proximate a cabin pressurization port (e.g. inlet 114 of crown). It is also contemplated that the passenger gasper valve may also be software controlled, in addition to being controlled manually by a passenger. The cabin to cargo outflow ducts 116 may also contain software controlled valves to control airflow.

A plurality of sensors 128 are disposed in the interior space 108 configured to sense a passenger health condition. The plurality of sensors 128 may additionally be configured to sense an occupancy. The sensors can include any suitable sensor for determining a passenger health condition or an occupancy of the interior space 108 and can be positioned in central locations within the interior space 108 or may be local to each passenger unit 124. **In** determining a passenger health condition, a sensor 128 can be incorporated into an in-flight entertainment (IFE) system 130 (e.g. to determine a temperature of a passenger). A sensor 128 can include a humidity sensor placed a passenger unit 124 to sense changes in relative humidity above a threshold (e.g. to determine if a passenger has sneezed or is experiencing significant change in exhalation such as coughing causing a relative humidity above about 15%). A sensor 128 can include an auditory sensor configured to sense sounds such as coughing and/or sneezing. The sensor 128 can include an imaging device (e.g. a thermal imaging device) configured to sense passenger body temperature above a threshold (e.g. 100.4°F(38°C)). **In** certain embodiments, the sensor can include a user input feature 129, where if flight crew become aware of a sick passenger **P,** but surrounding sensors 128 did not detect the condition, the flight crew can input a location of the sick passenger P and their known condition.

**In** determining an occupancy of the interior space 108, or changes in occupancy, the sensors 128 can include an imaging device configured to capture a reference image and a test image. A difference in passenger occupancy between the reference image and the test image can determine any changes in occupancy or weight distribution within the interior space 108. **In** certain embodiments, an occupancy sensor 128 can include a weight sensor in each seat 132 configured to determine an aggregate weight of passengers within the interior space 108, as well as to determine the physical distribution of the passengers within the interior space 108. The physical location of passengers as well as their relative weights can impact how the airflow is modulated when a passenger health condition has been detected. It is contemplated that any or all sensors 128 described herein can be used in the interior space 108, any combination of sensors 128 may be used, or any one sensor 128 may be included individually within the interior space as needed or desired.

A controller 134 is operatively connected to receive signals 136 from the plurality of sensors 128 to control the software controlled valves 126 via signals 138. The controller 134 includes machine readable instructions configured to cause the controller 134 to adjust the flow of air 106 through the plurality of ducts 104 with a respective valve or subset of the valves 126 based on the sensed passenger condition. For example, the controller 134 can receive input from the sensors 128 and redistribute the aggregate air flow 106 by dynamically equalizing a positive pressure midpoint (PPM) 140, 142, 144 between all nearest passenger units 124 during normal operation, to generate negative pressure around potentially sick passengers encouraging the airflow away from the other passengers (e.g. as shown in Fig. 2). In this way, if any sensor 128 detects a sick passenger health condition (e.g. high temperature, high instance of sneezing, etc.), and after evaluating occupancy, the controller 134 can decrease airflow 106 to the passenger unit 124 holding the sick passenger (e.g. as indicated), while increasing flow 106 to the surrounding passengers. The negative pressure surrounding the sick passenger P will minimize the range with which exhaled pathogens can be spread to surrounding passengers. Those valves 126 located in ducts 104 farther away from the sick passenger P may remain unchanged by the sensed condition, or they may be adjusted by any suitable amount to maintain equalized pressure within the interior space 108.

The controller 134 can include a stack based adaptive logic parameter definition item (PDI) file to be interpreted by the controller 134 along with the machine readable instructions. Through use of adaptive logic parameter definition item (PDI) files, the airline using system 100 can autonomously change the logic and behavior of the controller 134 without requiring re-verification of the core computing software applications (e.g. without requiring a 100% regression test on the entire system 100). Instead, it is only required that a change in control logic or behavior be tested for functionality with the system 100. Such a process dramatically reduces the cost of the overall system 100 as well as time to implement the system 100 should there be a change.

In embodiments, the interior space 108 includes a main space 146 and a quarantine zone 148 where sick passengers P may be placed away from other passengers. In this case, in addition to adjusting airflow as described above, adjusting the flow of air through ducts includes increasing flow into the main space 146 while decreasing flow into the quarantine zone 148 encouraging the quarantine airflow to flow out of the aircraft. Here, the flow of air 106 from the quarantine zone is exhausted from the interior space 108, either to atmosphere through an outflow valve 150, or passed through an air filter 152 (e.g. a high-efficiency particulate absorbing (HEPA) filter) before being recirculated to the interior space 108. If there are any pathogens in the air being exhausted 106e from the interior space 108, or quarantine zone, they will be completely filtered when the air is passed through the HEPA filter 152, or they will be expelled with the air going to atmosphere. Therefore, once the air moves through the outflow 116?, that air is no longer a risk for transmission of any pathogens therein.

In accordance with another aspect of this disclosure, a method comprises sensing a passenger health condition (e.g. using sensors 128) in an interior space 108 and adjusting airflow 106 into the interior space 108 based on the sensed passenger health condition. Adjusting airflow 106 can include changing an airflow circulation pattern based on the sensed passenger health condition and/or occupancy. For example, adjusting airflow includes opening and/or closing a valve 126 in a respective duct 104 to increase and/or decrease flow to a passenger unit 124 based on the sensed passenger health condition and/or occupancy. Adjusting airflow 106 can thus include decreasing airflow to a respective passenger unit 124 holding a sick passenger **P,** and increasing airflow to a respective passenger unit(s) 124 surrounding the respective passenger unit 124 holding the sick passenger P.

**In** embodiments, the method can further include at least one of imaging the interior space 108 at a first time, imaging the space at a second time, and comparing the images to determine an occupancy (e.g. using an imaging device as described above) and/or sensing a weight distribution of passengers within the interior space 108 to determine an occupancy (e.g. using sensors 128).

The interior space 108 includes a main space 146 and a quarantine zone 148, where adjusting airflow includes increasing flow into the main space 146 while decreasing flow into the quarantine zone 148, exhausting air from the quarantine zone 148 from the interior space 108. Exhausting can include at least one of exhausting air 106e to atmosphere through an outflow valve 150, and/or exhausting air 106e to a recirculation module 154 and filtering the air 106e through an air filter 152 before recirculation.

The methods and systems of the present disclosure, as described above and shown in the drawings, provide for minimizing pathogen transmission in an aircraft cabin by adaptively controlling airflow through the dynamic monitoring and analysis of passengers' status. Though the system 100 as described herein is described with respect to an aircraft cabin, the systems and methods can readily apply to any enclosed interior space having an environmental control system, or other suitable HVAC system for air circulation, such as other commercial passenger vehicles or in buildings.

While the apparatus and methods of the subject disclosure have been shown and described, those skilled in the art will readily appreciate that changes and/or modifications may be made thereto without departing from the scope of the invention as defined by the claims.

## Claims

1. A system for an aircraft, the system comprising:
an interior space (108);
an environmental control system, ECS (102), having a plurality of ducts (104) configured to convey a flow of air (106) into the interior space (108) through the plurality of ducts;
a plurality of valves (126) disposed in the plurality of ducts to control the flow of air through a respective duct into the interior space;
a plurality of sensors (128) disposed in the interior space configured to sense a passenger health condition; and
a controller (134) operatively connected to receive signals from the plurality of sensors, the controller including machine readable instructions configured to cause the controller to:
adjust the flow of air through the plurality of ducts with a respective valve or subset of the valves based on the sensed passenger health condition; and **characterized in that**,
the interior space includes a main space (146) and further comprising a quarantine zone (148), wherein adjusting the flow of air through the plurality of ducts includes increasing flow into the main space and decreasing flow into the quarantine zone, and wherein the flow of air from the quarantine zone is exhausted from the interior space.

2. The system as recited in claim 1, wherein each duct of the plurality of ducts further includes an inlet (114) and an outflow (116), wherein the outflow is positioned on a floor (120) of the interior space.

3. The system of claim 1 or 2, further comprising an imaging device disposed in the interior space configured to capture a reference image and a test image, wherein the sensed passenger health condition includes determining a difference in passenger occupancy between the reference image and the test image and optionally wherein the imaging device is a thermal imaging device, wherein the sensed passenger health condition is a passenger body temperature above a threshold.

4. The system as recited in any preceding claim, wherein the sensed passenger health condition includes at least one of: weight distribution of passengers within the interior space, physical distribution of passengers within the interior space, a passenger body temperature above a threshold, a change in relative humidity in a passenger unit above a threshold, and/or a sound of coughing or sneezing.

5. The system as recited in any preceding claim, wherein at least one valve of the plurality of valves is disposed in a respective one of the plurality of ducts in series with a passenger gasper valve, and/or
wherein at least one valve of the plurality of valves is disposed in a respective duct proximate a cabin pressurization port.

6. The system as recited in any preceding claim, wherein the plurality of sensors includes a sensor incorporated into an in-flight entertainment, IFE, system.

7. The system as recited in any preceding claim, wherein adjusting the flow of air through the plurality of ducts includes changing an airflow circulation pattern based on the sensed passenger health condition.

8. The system as recited in any preceding claim, wherein exhausted air is exhausted to atmosphere through an outflow valve (150), and/or wherein the exhausted air is passed through an air filter before being recirculated.

9. The system as recited in any preceding claim, wherein the controller includes an adaptive logic parameter definition item, **PDI,** file.

10. A method comprising:
sensing a passenger health condition in an interior space; and
adjusting airflow into the interior space based on the sensed passenger health condition; and **characterized in that**
the interior space includes a main space and further comprising a quarantine zone,
wherein adjusting airflow includes increasing flow into the main space and decreasing flow into the quarantine zone, and further comprising, exhausting air from the quarantine zone from the interior space.

11. The method as recited in claim 10, wherein adjusting airflow includes changing an airflow circulation pattern based on the sensed passenger health condition and/or an occupancy, and optionally
wherein adjusting airflow includes opening and/or closing a valve in a respective duct to increase and/or decrease flow to a respective passenger unit based on the sensed passenger health condition and/or occupancy.

12. The method as recited in claim **11,** wherein adjusting airflow includes, decreasing airflow to a respective passenger unit holding a sick passenger, and increasing airflow to a respective passenger unit surrounding the respective passenger unit holding the sick passenger.

13. The method as recited in any of claims 10 to 12, wherein the method further includes at least one of:
imaging the interior space at a first time, imaging the space at a second time, and comparing the images to determine an occupancy and/or
sensing a weight distribution of passengers within the interior space to determine an occupancy.

14. The method as recited in any of claims 10 to 13,
wherein exhausting air includes at least one of, exhausting air to atmosphere through an outflow valve, and/or exhausting air to a recirculation module and filtering the air through an air filter before recirculation.

## Patentansprüche

1. System für ein Luftfahrzeug, wobei das System Folgendes umfasst:
ein Innenraum (108);
ein Umweltkontrollsystem, ECS, (102), das eine Vielzahl von Kanälen (104) aufweist, die dazu ausgelegt sind, einen Luftstrom (106) durch die Vielzahl von Kanälen in den Innenraum (108) zu befördern;
eine Vielzahl von Ventilen (126), die in der Vielzahl von Kanälen angeordnet sind, um den Luftstrom durch einen jeweiligen Kanal in den Innenraum zu steuern;
eine Vielzahl von Sensoren (128), die in dem Innenraum angeordnet und dazu ausgelegt sind, einen Gesundheitszustand von Passagieren zu erfassen; und
eine Steuerung (134), die wirkverbunden ist, um Signale von der Vielzahl von Sensoren zu empfangen, wobei die Steuerung maschinenlesbare Anweisungen beinhaltet, die dazu ausgelegt sind, die Steuerung zu Folgendem zu veranlassen:
Anpassen des Luftstroms durch die Vielzahl von Kanälen mit einem jeweiligen Ventil oder einer Teilmenge der Ventilen basierend auf dem erfassten Gesundheitszustand der Passagiere; und **dadurch gekennzeichnet, dass**
der Innenraum einen Hauptraum (146) beinhaltet, und ferner umfassend eine Quarantänezone (148), wobei das Anpassen des Luftstroms durch die Vielzahl von Kanälen beinhaltet, den Strom in den Hauptraum zu erhöhen und den Strom in die Quarantänezone zu verringern, und wobei der Luftstrom aus der Quarantänezone aus dem Innenraum abgeführt wird.

2. System nach Anspruch 1, wobei jeder Kanal der Vielzahl von Kanälen ferner einen Einlass (114) und einen Auslass (116) beinhaltet, wobei der Auslass auf einem Boden (120) des Innenraums positioniert ist.

3. System nach Anspruch 1 oder 2, ferner umfassend eine in dem Innenraum angeordnete Bildgebungsvorrichtung, die dazu ausgelegt ist, ein Referenzbild und ein Testbild aufzunehmen, wobei der erfasste Gesundheitszustand der Passagiere Bestimmen eines Unterschieds hinsichtlich der Passagierbelegung zwischen dem Referenzbild und dem Testbild beinhaltet, und wobei die Bildgebungsvorrichtung optional eine Wärmebildvorrichtung ist, wobei der erfasste Gesundheitszustand der Passagiere eine Körpertemperatur von Passagieren über einem Schwellenwert ist.

4. System nach einem der vorhergehenden Ansprüche, wobei der erfasste Gesundheitszustand der Passagiere mindestens eines von Folgendem beinhaltet: eine Gewichtsverteilung von Passagieren in dem Innenraum, eine physische Verteilung von Passagieren in dem Innenraum, eine Körpertemperatur von Passagieren über einem Schwellenwert, eine Änderung der relativen Luftfeuchtigkeit in einer Passagiereinheit über einem Schwellenwert und/oder Husten- oder Niesgeräusche.

5. System nach einem der vorhergehenden Ansprüche, wobei mindestens ein Ventil der Vielzahl von Ventilen in einem jeweiligen der Vielzahl von Kanälen in Reihe mit einem Passagierbelüftungsventil angeordnet ist, und/oder wobei mindestens ein Ventil der Vielzahl von Ventilen in einem jeweiligen Kanal in der Nähe eines Kabinendruckanschlusses angeordnet ist.

6. System nach einem der vorhergehenden Ansprüche, wobei die Vielzahl von Sensoren einen in ein Bordunterhaltungssystem, IFE-System, integrierten Sensor beinhaltet.

7. System nach einem der vorhergehenden Ansprüche, wobei das Anpassen des Luftstroms durch die Vielzahl von Kanälen Ändern eines Luftstromzirkulationsmusters basierend auf dem erfassten Gesundheitszustand der Passagiere beinhaltet.

8. System nach einem der vorhergehenden Ansprüche, wobei Abluft durch ein Auslassventil (150) in die Atmosphäre abgeführt wird und/oder wobei die Abluft durch einen Luftfilter geleitet wird, bevor sie rezirkuliert wird.

9. System nach einem der vorhergehenden Ansprüche, wobei die Steuerung eine Datei mit Parameterdefinitionselementen für adaptive Logik, PDI, beinhaltet.

10. Verfahren, umfassend:
Erfassen eines Gesundheitszustands von Passagieren in einem Innenraum; und
Anpassen eines Luftstroms in den Innenraum basierend auf dem erfassten Gesundheitszustand der Passagiere; **dadurch gekennzeichnet, dass**
der Innenraum einen Hauptraum beinhaltet, und ferner umfassend eine Quarantänezone, wobei das Anpassen des Luftstroms Erhöhen des Stroms in den Hauptraum und Verringern des Stroms in die Quarantänezone beinhaltet, und ferner umfassend Abführen von Luft aus der Quarantänezone aus dem Innenraum.

11. Verfahren nach Anspruch 10, wobei das Anpassen des Luftstroms Ändern eines Luftstromzirkulationsmusters basierend auf dem erfassten Gesundheitszustand der Passagiere und/oder einer Belegung beinhaltet, und optional
wobei das Anpassen des Luftstroms Öffnen und/oder Schließen eines Ventils in einem jeweiligen Kanal beinhaltet, um den Strom zu einer jeweiligen Passagiereinheit basierend auf dem erfassten Gesundheitszustand und/oder der Belegung zu erhöhen und/oder zu verringern.

12. Verfahren nach Anspruch 11, wobei das Anpassen des Luftstroms Verringern des Luftstroms zu einer jeweiligen Passagiereinheit, die einen kranken Passagier aufnimmt, und Erhöhen des Luftstroms zu einer jeweiligen Passagiereinheit beinhaltet, die die jeweilige Passagiereinheit umgibt, die den kranken Passagier aufnimmt.

13. Verfahren nach einem der Ansprüche 10 bis 12, wobei das Verfahren ferner mindestens eines von Folgendem beinhaltet:
Abbilden des Innenraums zu einem ersten Zeitpunkt, Abbilden des Raums zu einem zweiten Zeitpunkt und Vergleichen der Bilder, um eine Belegung zu bestimmen, und/oder
Erfassen einer Gewichtsverteilung von Passagieren innerhalb des Innenraums, um eine Belegung zu bestimmen.

14. Verfahren nach einem der Ansprüche 10 bis 13,
wobei das Abführen von Luft mindestens eines von Abführen von Luft durch ein Auslassventil in die Atmosphäre und/oder Abführen von Luft in ein Rezirkulationsmodul und Filtern der Luft durch einen Luftfilter vor der Rezirkulation beinhaltet.

## Revendications

1. Système pour un aéronef, le système comprenant :
un espace intérieur (108) ;
un système de contrôle environnemental, ECS (102), ayant une pluralité de conduits (104) configurés pour acheminer un flux d'air (106) dans l'espace intérieur (108) à travers la pluralité de conduits ;
une pluralité de vannes (126) disposées dans la pluralité de conduits pour commander le flux d'air à travers un conduit respectif dans l'espace intérieur ;
une pluralité de capteurs (128) disposés dans l'espace intérieur configurés pour détecter l'état de santé d'un passager ; et
un dispositif de commande (134) connecté de manière fonctionnelle pour recevoir des signaux à partir de la pluralité de capteurs, le dispositif de commande comportant des instructions lisibles par machine configurées pour amener le dispositif de commande à :
régler le flux d'air à travers la pluralité de conduits avec une vanne respective ou un sous-ensemble des vannes sur la base de l'état de santé du passager détecté ; et **caractérisé en ce que**,
l'espace intérieur comporte un espace principal (146) et comprenant en outre une zone de quarantaine (148), dans lequel le réglage du flux d'air à travers la pluralité de conduits comporte l'augmentation du flux dans l'espace principal et la diminution du flux dans la zone de quarantaine, et dans lequel le flux d'air de la zone de quarantaine est évacué de l'espace intérieur.

2. Système selon la revendication 1, dans lequel chaque conduit de la pluralité de conduits comporte en outre une entrée (114) et une sortie (116), dans lequel la sortie est positionnée sur un plancher (120) de l'espace intérieur.

3. Système selon la revendication 1 ou 2, comprenant en outre un dispositif d'imagerie disposé dans l'espace intérieur configuré pour capturer une image de référence et une image de test, dans lequel l'état de santé du passager détecté comporte la détermination d'une différence d'occupation de passagers entre l'image de référence et l'image de test et éventuellement dans lequel le dispositif d'imagerie est un dispositif d'imagerie thermique, dans lequel l'état de santé du passager détecté est une température corporelle de passager supérieure à un seuil.

4. Système selon une quelconque revendication précédente, dans lequel l'état de santé du passager détecté comporte au moins un des éléments suivants : une répartition du poids des passagers dans l'espace intérieur, une répartition physique des passagers dans l'espace intérieur, une température corporelle de passager supérieure à un seuil, une variation de l'humidité relative dans une unité de passagers supérieure à un seuil et/ou un bruit de toux ou d'éternuement.

5. Système selon une quelconque revendication précédente, dans lequel au moins une vanne de la pluralité de vannes est disposée dans un conduit respectif de la pluralité de conduits en série avec une vanne d'admission d'air pour passagers, et/ou
dans lequel au moins une vanne de la pluralité de vannes est disposée dans un conduit respectif à proximité d'un orifice de pressurisation de la cabine.

6. Système selon une quelconque revendication précédente, dans lequel la pluralité de capteurs comporte un capteur incorporé dans un système de divertissement en vol, IFE.

7. Système selon une quelconque revendication précédente, dans lequel le réglage du flux d'air à travers la pluralité de conduits comporte la modification d'un schéma de circulation d'air sur la base de l'état de santé du passager détecté.

8. Système selon une quelconque revendication précédente, dans lequel l'air évacué est évacué vers l'atmosphère à travers une vanne de sortie (150), et/ou dans lequel l'air évacué passe à travers un filtre à air avant d'être recirculé.

9. Système selon une quelconque revendication précédente, dans lequel le dispositif de commande comporte un fichier d'élément de définition de paramètre, PDI, de logique adaptative.

10. Procédé comprenant :
la détection de l'état de santé d'un passager dans un espace intérieur ; et
le réglage du flux d'air dans l'espace intérieur sur la base de l'état de santé du passager détecté ; et **caractérisé en ce que**
l'espace intérieur comporte un espace principal et comprenant en outre une zone de quarantaine, dans lequel le réglage du flux d'air comporte l'augmentation du flux dans l'espace principal et la diminution du flux dans la zone de quarantaine, et comprenant en outre l'évacuation de l'air de la zone de quarantaine hors de l'espace intérieur.

11. Procédé selon la revendication 10, dans lequel le réglage du flux d'air comporte la modification d'un schéma de circulation d'air sur la base de l'état de santé du passager détecté et/ou d'une occupation, et éventuellement
dans lequel le réglage du flux d'air comporte l'ouverture et/ou la fermeture d'une vanne dans un conduit respectif afin d'augmenter et/ou de diminuer le flux vers une unité de passagers respective sur la base de l'état de santé du passage détecté et/ou de l'occupation.

12. Procédé selon la revendication 11, dans lequel le réglage du flux d'air comporte la diminution du flux d'air vers une unité de passagers respective contenant un passager malade et l'augmentation du flux d'air vers une unité de passagers respective entourant l'unité de passagers respective contenant le passager malade.

13. Procédé selon l'une quelconque des revendications 10 à 12, dans lequel le procédé comporte en outre au moins un des éléments suivants :
l'imagerie de l'espace intérieur à un premier instant, l'imagerie de l'espace intérieur à un second instant et la comparaison des images afin de déterminer une occupation et/ou la détection d'une répartition de poids de passagers dans l'espace intérieur afin de déterminer une occupation.

14. Procédé selon l'une quelconque des revendications 10 à 13, dans lequel l'évacuation de l'air comporte au moins une des opérations suivantes : évacuation de l'air vers l'atmosphère à travers une vanne de sortie et/ou évacuation de l'air vers un module de recirculation et filtration de l'air à travers un filtre à air avant recirculation.
